# EUROPEAN PATENT APPLICATION

(11) **EP 4 645 193 A1**
(43) Date of publication of application: **05.11.2025**
(21) Application number: 25173112.1
(22) Date of filing: 29.04.2025
(51) Int. Cl.: G06Q 20/32, H04M 1/72463

(54) **SYSTEMS AND METHODS FOR TIME AND/OR LOCATION BASED DISABLING OF MOBILE APPLICATION FUNCTIONALITY**

(30) Priority: 29.04.2024 US 202463640073 P; 28.04.2025 US 202519191145
(71) Applicant: JPMorgan Chase Bank, N.A., New York, NY 10179 (US)
(72) Inventor: LONCARIC, Goran, New York, 10179 (US); GEAN, Gerardo, New York, 10179 (US); BANALA, Sandeep, New York, 10179 (US)
(74) Representative: Patentanwälte Olbricht Buchhold Keulertz

(57) **Abstract**

A method may include: (1) receiving, at a computer program, such as a mobile banking application, executed by an electronic device, a request to disable a feature of the computer program, such as a payment feature, for a time period; (2) disabling, by the computer program, the feature; (3) determining, by the computer program, that the time period has passed; and (4) enabling, by the computer program, the feature. The feature may be disabled by removing an icon to access the feature, and may be enabled by adding the icon to access the feature. The method may also include: monitoring, by the computer program, a location of the electronic device; determining, by the computer program, that the electronic device is in a registered location; and enabling, by the computer program, the feature even if the time period has not passed.

## Description

### RELATED APPLICATIONS

This application claims priority to, and the benefit of, U.S. Provisional Patent Application Ser. No. 63/640,073, filed April 29, 2024, the disclosure of which is hereby incorporated, by reference, in its entirety.

### BACKGROUND OF THE INVENTION

### 1. Field of the Invention

Embodiments relate to systems and methods for time and/or location disabling of mobile application functionality.

### 2. Description of the Related Art

Robberies in which a criminal forces an individual to transfer money using bank and payment applications is on the rise. Using a money transfer service such as Zelle, criminals have forced individuals to transfer money to the criminal's account. Because the money is transferred in real-time, the criminal knows whether or not the transfer is successful.

To limit risk, authorities suggest that individuals avoid having their phone out when outside at night, limit the amount money in their checking accounts, or delete bank and payment applications when they are not being used. Further, individuals are encouraged to use biometric authentication and multi-factor authentication. The mitigation/defense solutions are either not practical, or are incorrect in view of the threat.

### SUMMARY OF THE INVENTION

Systems and methods for time and/or location disabling of mobile application functionality are disclosed. In one embodiment, a method may include: (1) receiving, at a computer program executed by an electronic device, a request to disable a feature of the computer program for a time period; (2) disabling, by the computer program, the feature; (3) determining, by the computer program, that the time period has passed; and (4) enabling, by the computer program, the feature.

In one embodiment, the computer program may include a mobile banking application, and the feature may include a payment feature.

In one embodiment, the feature may be disabled by removing an icon to access the feature.

In one embodiment, the feature may be enabled by adding an icon to access the feature.

In one embodiment, an icon to access the feature may be altered in response to the feature being disabled.

In one embodiment, the method may also include: receiving, by the computer program and during the time period, an attempt to access the feature; and displaying, by the computer program, a message that the feature may be unavailable or disabled.

In one embodiment, the method may also include: monitoring, by the computer program, a location of the electronic device; determining, by the computer program, that the electronic device is in a registered location; and enabling, by the computer program, the feature even if the time period has not passed.

According to another embodiment, a method may include: (1) receiving, at a computer program executed by an electronic device and from a user, a request to enable a feature of the computer program for a time period; (2) enabling, by the computer program, the feature; (3) determining, by the computer program, that the time period has passed; and (4) disabling, by the computer program, the feature.

In one embodiment, the computer program may include a streaming service application, and the feature may include a subscription to the streaming service application.

In one embodiment, the feature may be enabled by adding an icon to access the feature.

In one embodiment, the feature may be disabled by removing an icon to access the feature.

In one embodiment, the method may also include: monitoring, by the computer program, a location of a mobile electronic device associated with the user; determining, by the computer program, that the electronic device outside of a location of the electronic device; and disabling, by the computer program, the feature even if the time period has not passed.

In one embodiment, the method may also include: monitoring, by the computer program, a registration status of the user at a location associated with the electronic device; determining, by the computer program, that the user is no longer registered at the location; and disabling, by the computer program, the feature even if the time period has not passed.

According to another embodiment, a non-transitory computer readable storage medium may include instructions stored thereon, which when read and executed by one or more computer processors, cause the one or more computer processors to perform steps comprising: receiving a request to disable a feature of a computer program executed by an electronic device for a time period; disabling the feature; determining that the time period has passed; and enabling the feature.

In one embodiment, the computer program may include a mobile banking application, and the feature may include a payment feature.

In one embodiment, the feature may be disabled by removing an icon to access the feature.

In one embodiment, the feature may be enabled by adding an icon to access the feature.

In one embodiment, an icon to access the feature may be altered in response to the feature being disabled.

In one embodiment, the non-transitory computer readable storage medium may also include instructions stored thereon, which when read and executed by the one or more computer processors, cause the one or more computer processors to perform steps comprising: receiving, during the time period, an attempt to access the feature; and displaying a message that the feature is unavailable or disabled.

In one embodiment, the non-transitory computer readable storage medium may also include instructions stored thereon, which when read and executed by the one or more computer processors, cause the one or more computer processors to perform steps comprising: monitoring a location of the electronic device; determining that the electronic device is in a registered location; and enabling the feature even if the time period has not passed.

### BRIEF DESCRIPTION OF THE DRAWINGS

For a more complete understanding of the present invention, the objects and advantages thereof, reference is now made to the following descriptions taken in connection with the accompanying drawings in which:
Figure 1 illustrates a system for time and/or location disabling or enabling of mobile application functionality according to an embodiment;
Figure 2 illustrates a method for time and/or location disabling of mobile application functionality according to an embodiment;
Figure 3 illustrates a method for time and/or location enabling of mobile application functionality according to an embodiment; and
Figure 4 depicts an exemplary computing system for implementing aspects of the present disclosure.

### DETAILED DESCRIPTION OF PREFERRED EMBODIMENTS

Embodiments relate to systems and methods for time and/or location disabling of mobile application functionality. In embodiments, certain features of a mobile application, such as money transfer, may be disabled by the user for a certain time period. For example, the feature(s) may be disabled when the user anticipates the possibility of being exposed to criminal activity, such as being forced to transfer money using a mobile application.

In another embodiment, certain features may be enabled for a certain time period, and then disabled after the passage of the certain time period, or in response to the user being at a certain location, or a combination thereof. For example, when staying at a hotel, a user may sign in to access a streaming service application on a smart television and may set a time period for access to the streaming service to be enabled. The access may be automatically disabled when that time period expires, when the user leaves a location, when the user takes an action (e.g., checks out of a hotel), etc.

In one embodiment, a recommendation to disable the mobile applications may be provided based on historical user location data, as well as other (e.g., government public safety agency sourced) location risk data, such as being in a location designated by the State Department as a high risk, being in a zip code with high crime statistics, etc. may also be considered as is necessary and/or desired.

The time period may be specified by the user, may be a default value, may be based on historical data (e.g., time in which the user is historically in the area), etc.

In embodiments, all application features may be disabled. For example, the user may be unable to launch the application or access any features, and may be provided with a message indicating that access to the mobile application has been disabled.

In one embodiment, the icon for the application mobile application may change to a different style, a different color, or may be removed from the screen during this period to indicate the application is currently in the protected or stealth mode.

In another embodiment, access to certain features in the mobile application may be disabled. For example, the user may be able to access transaction data, balances, etc. but may be prevented from accessing money transfer features. These features may be presented as greyed-out, as disabled, or may be removed from the display during this period.

In one embodiment, the location of the mobile device may be used to initiate or to end the period in which access to the mobile application or certain features is disabled. For example, the period may be triggered when the location of the user's mobile device indicates that the user leaves one of the user's "safe spaces," may be in a risky area, travelling abroad, etc. In another embodiment, when the location of the user's mobile device indicates that the user has returned to a "safe space" (e.g., home, work, etc.), full access to the mobile application may be restored.

A description of "safe spaces" and the use thereof is provided in U.S. Provisional Patent Application Serial Number 63/514,847 and U.S. Patent Application Ser. No. 18/778,473, the disclosures of each of which is hereby incorporated, by reference, in its entirety.

As another example of combining time and location attributes and restrictions, a user may disable money transfer features when the user is travelling abroad, but this may only occur once the location of the mobile device indicates that the user is abroad (e.g., it would not disable access when the user is on a plane to the destination even though the time period may have started).

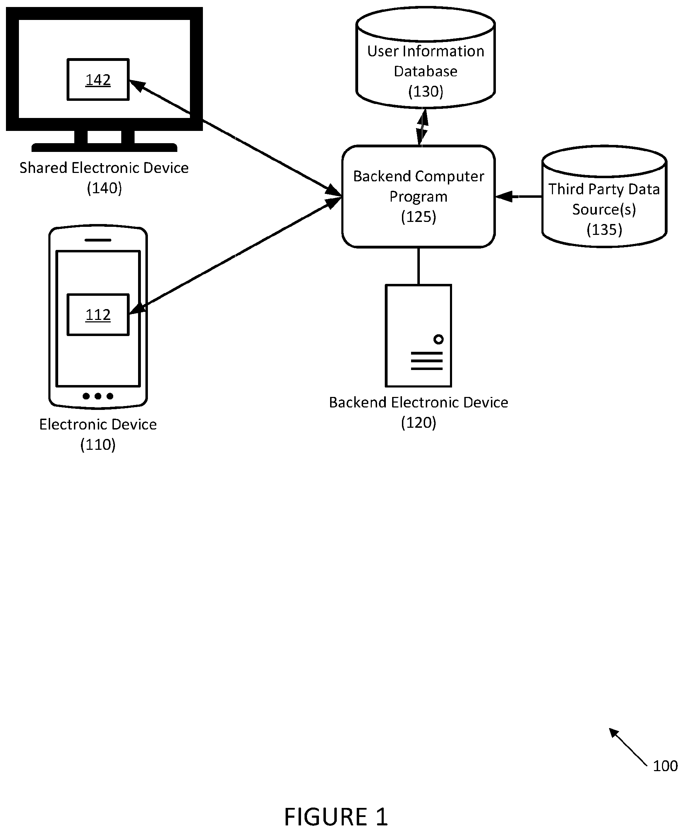

Referring to Figure 1, a system for time and/or location disabling or enabling of mobile application functionality is disclosed according to an embodiment. System 100 may include electronic device 110, which may be a mobile computer, a smart device (e.g., smart phone, smart watch, etc.), an Internet of Things (IoT) appliance, etc.

Electronic device 110 may execute one or more computer programs 112. For example, computer programs 112 may include mobile applications, etc. Computer program 112 may provide features that a user may wish to limit access to. For example, computer program 112 may be mobile banking application, and the user may wish to restrict access to payments and transfers for a time period and/or when the user is traveling outside of a "safe space."

In one embodiment, electronic device 110 may include location sensing equipment, such as a global positioning system sensor (not shown).

System 100 may also include shared electronic device 140, such as a smart television at a hotel, a kiosk, etc. Shared electronic device 140 may execute application 142, such as a streaming service and the user may wish to enable access to the streaming service for a time period (e.g., during a hotel stay) and may wish to have the access disabled after that time period or when the user checks out.

System 100 may further include backend electronic device 120 that may be a server (e.g., physical and/or cloud-based), a computer, etc. Backend electronic device 120 may execute backend computer program 125 that may interface with electronic device 110. Backend computer program 125 may communicate, for example, instructions to computer program 112 to enable or disable certain features of computer program 112 and/or application 142 (e.g., access streaming content, etc.).

In one embodiment, user information database 130 may maintain data regarding the user, such as approved location data, etc.

System 100 may also include third party data source(s) 135, which may provide information such as government crime statistics for locations, a list of high-risk countries, etc.

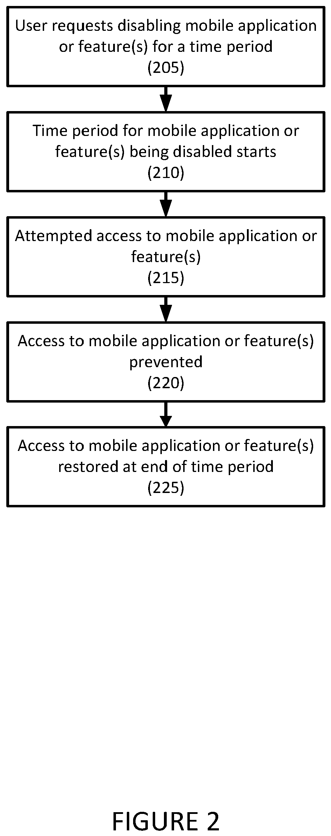

Referring to Figure 2, a method for time and/or location disabling of mobile application functionality is disclosed according to an embodiment.

In step 205, a user may request disabling a mobile application or certain feature(s) thereof for a time period. In one embodiment, the time period may be based on a period in which the user may expect to be exposed to a risk of being forced to make a transfer using a mobile application.

In one embodiment, the amount of time may be set by the user. For example, the amount of time may be specified as a time period (e.g., 2 hours), a time period (e.g., 9 am to 5 pm), etc. In another embodiment, the user may set an expiration day and time. In another embodiment, the time period in which the mobile applications are available may be set (e.g., the mobile application will be available between 9 am and 5 pm, and otherwise unavailable).

Any suitable manner of identifying a time period in which the mobile applications are available and/or disabled may be used as is necessary and/or desired.

In step 210, the time period for mobile application or feature(s) being disabled may start. In one embodiment, the time period may start when the user submits the request. In another embodiment, the time period may start when the user leaves a "safe space."

In one embodiment, the application may be prevented from being launched, or the feature(s) may be disabled. The style or color of the application icon or the features may change, the application may be removed, or an indication that the application is unavailable may be added to the application icon during the time period.

In step 215, during the time period, an attempted access to mobile application or feature(s) may occur.

In step 220, the mobile application may prevent access to the mobile application or feature(s). In one embodiment, the mobile application may not launch, or a message may be displayed indicating that the application is disabled.

Optionally, the time remaining may be displayed.

In step 225, access to mobile application or feature(s) may be restored at end of time period. In one embodiment, the access may be restored when the user returns to the safe space.

In one embodiment, the safe space information may be provided to a fraud system and may be used for fraud decisioning.

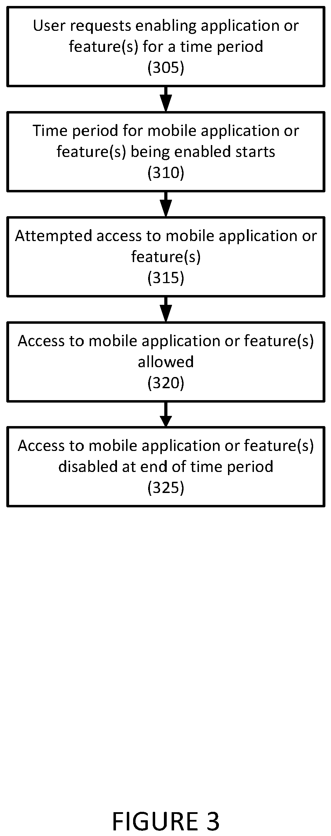

Referring to Figure 3, a method for time and/or location enabling of mobile application functionality is disclosed according to an embodiment.

In step 305, a user may request enabling an application or certain feature(s) thereof executed on a shared electronic device for a time period. In one embodiment, the time period may be based on a period in which the user may expect to be present at an area, such as staying at a hotel.

An example of the application may include a streaming service application, and the feature may be a subscription to the streaming service application.

In one embodiment, the amount of time may be set by the user. For example, the amount of time may be specified as a time period (e.g., 2 hours), a time period (e.g., 9 am to 5 pm), etc. In another embodiment, the user may set an expiration day and time.

Any suitable manner of identifying a time period in which the applications or features are available may be used as is necessary and/or desired.

In step 310, the time period for application or feature(s) being enabled may start. In one embodiment, the time period may start when the user submits the request. In another embodiment, the time period may start when the user arrives at a location, checks into a hotel, etc.

In step 315, during the time period, an attempted access to application or feature(s) may occur, and in step 320, access to the application or feature(s) may be enabled or allowed. For example, the user may be able to access a streaming service on the shared electronic device.

Optionally, the time remaining may be displayed.

In step 325, access to application or feature(s) may be disabled at end of time period. In one embodiment, the access may be disabled when the user checks out of the hotel. In another embodiment, the access may be disabled when a mobile electronic device associated with the user is not present at the hotel. The access may be reenabled if the mobile electronic device returns to the location.

To disable the access, the application may automatically log the user out of the application or the feature(s).

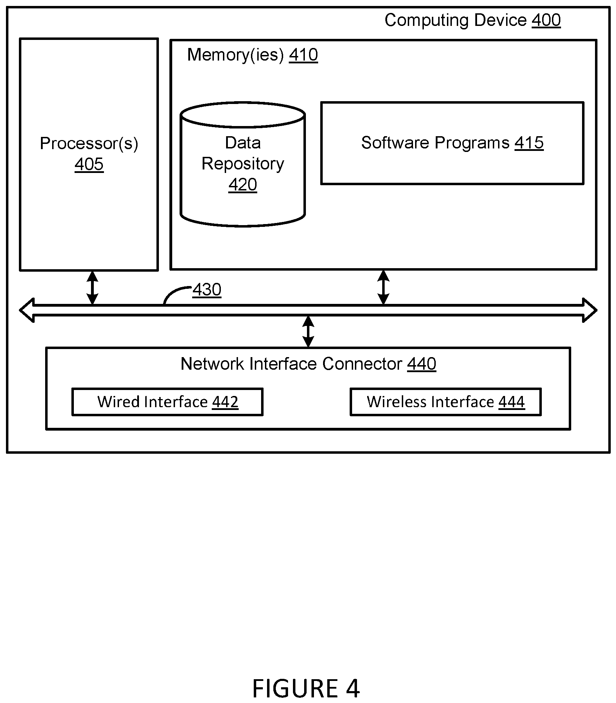

Figure 4 depicts an exemplary computing system for implementing aspects of the present disclosure. Figure 4 depicts exemplary computing device 400. Computing device 400 may represent the system components described herein. Computing device 400 may include processor 405 that may be coupled to memory 410. Memory 410 may include volatile memory. Processor 405 may execute computer-executable program code stored in memory 410, such as software programs 415. Software programs 415 may include one or more of the logical steps disclosed herein as a programmatic instruction, which may be executed by processor 405. Memory 410 may also include data repository 420, which may be nonvolatile memory for data persistence. Processor 405 and memory 410 may be coupled by bus 430. Bus 430 may also be coupled to one or more network interface connectors 440, such as wired network interface 442 or wireless network interface 444. Computing device 400 may also have user interface components, such as a screen for displaying graphical user interfaces and receiving input from the user, a mouse, a keyboard and/or other input/output components (not shown).

Hereinafter, general aspects of implementation of the systems and methods of embodiments will be described.

Embodiments of the system or portions of the system may be in the form of a "processing machine," such as a general-purpose computer, for example. As used herein, the term "processing machine" is to be understood to include at least one processor that uses at least one memory. The at least one memory stores a set of instructions. The instructions may be either permanently or temporarily stored in the memory or memories of the processing machine. The processor executes the instructions that are stored in the memory or memories in order to process data. The set of instructions may include various instructions that perform a particular task or tasks, such as those tasks described above. Such a set of instructions for performing a particular task may be characterized as a program, software program, or simply software.

In one embodiment, the processing machine may be a specialized processor.

In one embodiment, the processing machine may be a cloud-based processing machine, a physical processing machine, or combinations thereof.

As noted above, the processing machine executes the instructions that are stored in the memory or memories to process data. This processing of data may be in response to commands by a user or users of the processing machine, in response to previous processing, in response to a request by another processing machine and/or any other input, for example.

As noted above, the processing machine used to implement embodiments may be a general-purpose computer. However, the processing machine described above may also utilize any of a wide variety of other technologies including a special purpose computer, a computer system including, for example, a microcomputer, mini-computer or mainframe, a programmed microprocessor, a micro-controller, a peripheral integrated circuit element, a CSIC (Customer Specific Integrated Circuit) or ASIC (Application Specific Integrated Circuit) or other integrated circuit, a logic circuit, a digital signal processor, a programmable logic device such as a FPGA (Field-Programmable Gate Array), PLD (Programmable Logic Device), PLA (Programmable Logic Array), or PAL (Programmable Array Logic), or any other device or arrangement of devices that is capable of implementing the steps of the processes disclosed herein.

The processing machine used to implement embodiments may utilize a suitable operating system.

It is appreciated that in order to practice the method of the embodiments as described above, it is not necessary that the processors and/or the memories of the processing machine be physically located in the same geographical place. That is, each of the processors and the memories used by the processing machine may be located in geographically distinct locations and connected so as to communicate in any suitable manner. Additionally, it is appreciated that each of the processor and/or the memory may be composed of different physical pieces of equipment. Accordingly, it is not necessary that the processor be one single piece of equipment in one location and that the memory be another single piece of equipment in another location. That is, it is contemplated that the processor may be two pieces of equipment in two different physical locations. The two distinct pieces of equipment may be connected in any suitable manner. Additionally, the memory may include two or more portions of memory in two or more physical locations.

To explain further, processing, as described above, is performed by various components and various memories. However, it is appreciated that the processing performed by two distinct components as described above, in accordance with a further embodiment, may be performed by a single component. Further, the processing performed by one distinct component as described above may be performed by two distinct components.

In a similar manner, the memory storage performed by two distinct memory portions as described above, in accordance with a further embodiment, may be performed by a single memory portion. Further, the memory storage performed by one distinct memory portion as described above may be performed by two memory portions.

Further, various technologies may be used to provide communication between the various processors and/or memories, as well as to allow the processors and/or the memories to communicate with any other entity; i.e., so as to obtain further instructions or to access and use remote memory stores, for example. Such technologies used to provide such communication might include a network, the Internet, Intranet, Extranet, a LAN, an Ethernet, wireless communication via cell tower or satellite, or any client server system that provides communication, for example. Such communications technologies may use any suitable protocol such as TCP/IP, UDP, or OSI, for example.

As described above, a set of instructions may be used in the processing of embodiments. The set of instructions may be in the form of a program or software. The software may be in the form of system software or application software, for example. The software might also be in the form of a collection of separate programs, a program module within a larger program, or a portion of a program module, for example. The software used might also include modular programming in the form of object-oriented programming. The software tells the processing machine what to do with the data being processed.

Further, it is appreciated that the instructions or set of instructions used in the implementation and operation of embodiments may be in a suitable form such that the processing machine may read the instructions. For example, the instructions that form a program may be in the form of a suitable programming language, which is converted to machine language or object code to allow the processor or processors to read the instructions. That is, written lines of programming code or source code, in a particular programming language, are converted to machine language using a compiler, assembler or interpreter. The machine language is binary coded machine instructions that are specific to a particular type of processing machine, i.e., to a particular type of computer, for example. The computer understands the machine language.

Any suitable programming language may be used in accordance with the various embodiments. Also, the instructions and/or data used in the practice of embodiments may utilize any compression or encryption technique or algorithm, as may be desired. An encryption module might be used to encrypt data. Further, files or other data may be decrypted using a suitable decryption module, for example.

As described above, the embodiments may illustratively be embodied in the form of a processing machine, including a computer or computer system, for example, that includes at least one memory. It is to be appreciated that the set of instructions, i.e., the software for example, that enables the computer operating system to perform the operations described above may be contained on any of a wide variety of media or medium, as desired. Further, the data that is processed by the set of instructions might also be contained on any of a wide variety of media or medium. That is, the particular medium, i.e., the memory in the processing machine, utilized to hold the set of instructions and/or the data used in embodiments may take on any of a variety of physical forms or transmissions, for example. Illustratively, the medium may be in the form of a compact disc, a DVD, an integrated circuit, a hard disk, a floppy disk, an optical disc, a magnetic tape, a RAM, a ROM, a PROM, an EPROM, a wire, a cable, a fiber, a communications channel, a satellite transmission, a memory card, a SIM card, or other remote transmission, as well as any other medium or source of data that may be read by the processors.

Further, the memory or memories used in the processing machine that implements embodiments may be in any of a wide variety of forms to allow the memory to hold instructions, data, or other information, as is desired. Thus, the memory might be in the form of a database to hold data. The database might use any desired arrangement of files such as a flat file arrangement or a relational database arrangement, for example.

In the systems and methods, a variety of "user interfaces" may be utilized to allow a user to interface with the processing machine or machines that are used to implement embodiments. As used herein, a user interface includes any hardware, software, or combination of hardware and software used by the processing machine that allows a user to interact with the processing machine. A user interface may be in the form of a dialogue screen for example. A user interface may also include any of a mouse, touch screen, keyboard, keypad, voice reader, voice recognizer, dialogue screen, menu box, list, checkbox, toggle switch, a pushbutton or any other device that allows a user to receive information regarding the operation of the processing machine as it processes a set of instructions and/or provides the processing machine with information. Accordingly, the user interface is any device that provides communication between a user and a processing machine. The information provided by the user to the processing machine through the user interface may be in the form of a command, a selection of data, or some other input, for example.

As discussed above, a user interface is utilized by the processing machine that performs a set of instructions such that the processing machine processes data for a user. The user interface is typically used by the processing machine for interacting with a user either to convey information or receive information from the user. However, it should be appreciated that in accordance with some embodiments of the system and method, it is not necessary that a human user actually interact with a user interface used by the processing machine. Rather, it is also contemplated that the user interface might interact, i.e., convey and receive information, with another processing machine, rather than a human user. Accordingly, the other processing machine might be characterized as a user. Further, it is contemplated that a user interface utilized in the system and method may interact partially with another processing machine or processing machines, while also interacting partially with a human user.

It will be readily understood by those persons skilled in the art that embodiments are susceptible to broad utility and application. Many embodiments and adaptations of the present invention other than those herein described, as well as many variations, modifications and equivalent arrangements, will be apparent from or reasonably suggested by the foregoing description thereof, without departing from the substance or scope. Accordingly, while the embodiments of the present invention have been described here in detail in relation to its exemplary embodiments, it is to be understood that this disclosure is only illustrative and exemplary of the present invention and is made to provide an enabling disclosure of the invention. Accordingly, the foregoing disclosure is not intended to be construed or to limit the present invention or otherwise to exclude any other such embodiments, adaptations, variations, modifications or equivalent arrangements.

## Claims

1. A method, comprising:
receiving, at a computer program executed by an electronic device, a request to disable a feature of the computer program for a time period;
disabling, by the computer program, the feature;
determining, by the computer program, that the time period has passed; and
enabling, by the computer program, the feature.

2. The method of claim 1, wherein the computer program comprises a mobile banking application, and the feature comprises a payment feature.

3. The method of claim 1, wherein the feature is disabled by removing an icon to access the feature.

4. The method of claim 3, wherein the feature is enabled by adding the icon to access the feature.

5. The method of claim 1, wherein an icon to access the feature is altered in response to the feature being disabled.

6. The method of claim 1, further comprising:
receiving, by the computer program and during the time period, an attempt to access the feature; and
displaying, by the computer program, a message that the feature is unavailable or disabled.

7. The method of claim 1, further comprising:
monitoring, by the computer program, a location of the electronic device;
determining, by the computer program, that the electronic device is in a registered location; and
enabling, by the computer program, the feature even if the time period has not passed.

8. A method, comprising:
receiving, at a computer program executed by an electronic device and from a user, a request to enable a feature of the computer program for a time period;
enabling, by the computer program, the feature;
determining, by the computer program, that the time period has passed; and
disabling, by the computer program, the feature.

9. The method of claim 8, wherein the computer program comprises a streaming service application, and the feature comprises a subscription to the streaming service application.

10. The method of claim 8, wherein the feature is adding an icon to access the feature.

11. The method of claim 10, wherein the feature is disabled by removing the icon to access the feature.

12. The method of claim 8, further comprising:
monitoring, by the computer program, a location of a mobile electronic device associated with the user ;
determining, by the computer program, that the electronic device outside of a location of the electronic device; and
disabling, by the computer program, the feature even if the time period has not passed.

13. The method of claim 8, further comprising:
monitoring, by the computer program, a registration status of the user at a location associated with the electronic device;
determining, by the computer program, that the user is no longer registered at the location; and
disabling, by the computer program, the feature even if the time period has not passed.

14. A non-transitory computer readable storage medium, including instructions stored thereon, which when read and executed by one or more computer processors, cause the one or more computer processors to perform steps comprising:
receiving a request to disable a feature of a computer program executed by an electronic device for a time period;
disabling the feature;
determining that the time period has passed; and
enabling the feature.

15. The non-transitory computer readable storage medium of claim 14, wherein the computer program comprises a mobile banking application, and the feature comprises a payment feature.

16. The non-transitory computer readable storage medium of claim 14, wherein the feature is disabled by removing an icon to access the feature.

17. The non-transitory computer readable storage medium of claim 16, wherein the feature is enabled by adding the icon to access the feature.

18. The non-transitory computer readable storage medium of claim 14, wherein an icon to access the feature is altered in response to the feature being disabled.

19. The non-transitory computer readable storage medium of claim 14, further including instructions stored thereon, which when read and executed by the one or more computer processors, cause the one or more computer processors to perform steps comprising:
receiving, during the time period, an attempt to access the feature; and
displaying a message that the feature is unavailable or disabled.

20. The non-transitory computer readable storage medium of claim 14, further including instructions stored thereon, which when read and executed by the one or more computer processors, cause the one or more computer processors to perform steps comprising:
monitoring a location of the electronic device;
determining that the electronic device is in a registered location; and
enabling the feature even if the time period has not passed.
